# EUROPÄISCHE PATENTANMELDUNG

(11) **EP 0 974 773 A2**
(43) Veröffentlichungstag der Anmeldung: **26.01.2000**
(21) Anmeldenummer: 99112072.6
(22) Anmeldetag: 23.06.1999
(51) Int. Cl.: F16H 49/00

(54) **Wellgetriebe mit verbesserten Pulsator**

(30) Priorität: 24.07.1998 DE 19833290
(71) Anmelder: IMS MORAT SÖHNE GmbH, D-78166 Donaueschingen (DE)
(72) Erfinder: Dold, Michael, 78166 Donaueschingen (DE)
(74) Vertreter: Patentanwälte Westphal, Mussgnug & Partner

(57) **Zusammenfassung**

Die Erfindung betrifft ein Wellgetriebe mit einem starren Stützring (1) mit einer zylindrischen, innenverzahnten Stützfläche (3), mit einer radialflexiblen Abrollbuchse (5) mit einer verzahnten Außenmantelfläche (7), mit einer mit einer Antriebswelle (11) verbundenen Antriebseinrichtung (30), durch welche über eine Vielzahl von Stegen oder Stößel (40) ein oder mehrere erste Umfangsabschnitte mit der Stützfläche (3) des Stütztringes (1) in Eingriff gehalten ist, wobei jeder der Stege oder Stößel (40) zumindest an einem seiner beiden Enden eine schlitzartige Nut hat und die Stege oder Stößel (40) sind mit einem ringförmigen Band einstückig aneinandergeformt, wobei das ringförmige Band mindestens annähernd auf halber Länge der einzelnen Stege oder Stößel (50) angeformt ist.

## Beschreibung

Die Erfindung betrifft ein Wellgetriebe mit den Merkmalen des Oberbegriffs des Anspruchs 1.

Die gängigen Wellgetriebe sind allgemein unter der Bezeichnung "Harmonic-Drive" bekannt. Bei diesen Harmonic-Drive-Getrieben befindet sich innerhalb eines starren Stützringes, der eine zylindrische, innenverzahnte Stützfläche aufweist, eine außenverzahnte, radialflexible Abrollbuchse, die beispielsweise durch eine geeignete Antriebseinrichtung elliptisch verformt wird. Innen- zu Außenverzahnung differieren um ein oder mehrere Zähne. Der Zahnkranz der radialflexiblen Abrollbuchse wird durch einen beispielsweise elliptisch geformten Innenkern einer Antriebseinrichtung in die zylindrische, innenverzahnte Stützfläche des starren Stützringes gedrückt. Aufgrund der unterschiedlichen Zähnezahl von Stützfläche und Abrollbuchse wird ein permanentes, fortlaufendes Versetzen der ineinander greifenden Umfangsabschnitte bewirkt. Eine ganze Umdrehung der Antriebswelle bewirkt hierdurch nur eine Weiterbewegung der Abrollbuchse um die vorgesehene Differenz der Zähnezahl von Stützring und Abrollbuchse. Mit Harmonic-Drive-Getrieben kann deshalb eine sehr hohe Untersetzung erreicht werden.

Ein Beispiel für ein solches Getriebe ist in DE 38 15 118 A1 beschrieben. Zur Verformung der Abrollbuchse ist eine Antriebswelle vorgesehen, auf der im Umfangsrichtung feststehend ein Getriebeelement mit elliptischen oder wenigstens im wesentlichen elliptischen Querschnitt sitzt. Die Abrollbuchse ist auf diesem Getriebeelement mittels eines Wälzlagers drehbar bzw. verschiebbar angeordnet. Anstelle des Wälzlagers kann auch ein anderes Lager, z. B. ein Gleitlager, vorgesehen sein. Durch die elliptische Gestaltung des erwähnten Getriebeelementes wird die Abrollbuchse ebenfalls elliptisch verformt und an zwei gegenüberliegenden Stellen in Anlage mit der Innenverzahnung des starren Stützringes gebracht.

Ein anderes in diesem Dokument beschriebenes Ausführungsbeispiel des Untersetzungsgetriebes weist als Antriebseinrichtung innerhalb der Abrollbuchse eine Planetenradeinheit aus. Diese besteht aus einem ersten, auf der Antriebswelle angeordneten und von diesem angetriebenen Sonnenrad, an dessen Umfangsfläche an zwei gegenüberliegenden Stellen zwei Planetenräder im Eingriff stehen. Diese Planetenräder sind an einer auf der Antriebswelle drehbar angeordneten Haltevorrichtung drehbar gelagert. Durch die Planetenräder wird die Abrollbuchse an zwei einander gegenüberliegenden Stellen gegen die Innenfläche des Stützringes gedrückt, so daß an diesen Stellen ein Getriebeingriff stattfindet.

Die Abtriebseite ist bei diesem vorbekannten Getriebe so gestaltet, daß die Abrollbuchse in Richtung Abtriebswelle einen verlängerten Bereich aufweist. Dieser verlängerte Bereich ist mit einem drehbar und konzentrisch zum Stützring gelagerten Übertragungselement über Zapfen drehfest verbunden. Die Zapfen sind am verlängerten Bereich der Abrollbuchse radial angeordnet und greifen in Ausnehmungen des jeweils anderen dieser beiden Elementen ein. Das erwähnte Übertragungselement ist drehfest mit der Abtriebswelle in Verbindung. Durch eine solche Lösung wird eine Beeinflussung durch das Übertragungselement auf die sich verformende Abrollbuchse vermieden, so daß ein verhältnismäßig kompakter Aufbau des gesamten Getriebes gewährleistet ist.

Problematisch bei diesem vorbekannten Getriebe ist die Tatsache, daß die Abtriebswelle mit der gleichen Geschwindigkeit wie die Abrollbuchse dreht. Der Gesamtuntersetzung dieses Getriebes sind daher Grenzen gesetzt.

Ein weiteres Getriebe, das nach Art eines Harmonic-Drive-Getriebes arbeitet, ist aus WO97/08008 bekannt. Die Antriebseinrichtung zur Verformung der Abrollbuchse besteht aus einer Vielzahl von im wesentlichen radial verlaufenden und unter sich gleich langen als Speichen oder Stößel ausgebildeten Übertragungselementen, die sich auf einen sogenannten "exzentrischen", insbesondere ellipsenförmigen oder triangulären Antriebskern abstützen, wobei der Hohlkreis des Antriebskerns einen wesentlichen kleineren Durchmesser aufweist als die in ihrer Grundform zylindrische, radialfiexible Abrollbuchse. Die einzelnen Stößel bzw. Stege bewegen sich bei Drehung des elliptischen oder triangulären Antriebskerns radial nach außen und wieder nach innen. Die Stößel oder Stege "pulsieren" quasi, was ein entsprechendes Pulsieren der Abrollbuchse bewirkt. Deshalb wird im folgenden für die Summe der Stößel oder Stege, also der Übertragungselemente der Begriff "Pulsator" verwendet.

Dieser "Pulsator" ist bei großen vom Getriebe zu leistenden Drehmomenten stark belastet, d.h., daß die einzelnen Stege oder Stößel knicken können. Des weiteren haben Versuche gezeigt, daß der bekannte "Pulsator" Geräusche verursacht.

Hier setzt die vorliegende Erfidnung an.

Das Ziel der Erfindung ist, das oben erwähnte bekannte Wellgetriebe so weiter zu entwickeln, daß einerseits die Geräuschproduktion reduziert und zusdätzlich der Wirkungsgrad des Getriebes vergrößert ist.

Diese Aufgabe wird durch ein Getriebe mit den Merkmalen des Anspruchs 1 gelöst.

Weiterbildungen sind Gegenstand der Unteransprüche.

Das Well- bzw. Untersetzungsgetriebe nach der Erfindung wird nachfolgend anhand von mehreren Ausführungsbeispielen in Zusammenhang mit Figuren näher erläutert. Es zeigen:
- Fig. 1:: Ein Ausführungsbeispiel eines bekannten Untersetzungsgetriebes, bei dem sich auf einem elliptischen Antriebskern eine Vielzahl von Stegen als "Pulsator" abgestützt sind,
- Fig. 2:: ein erstes Ausführungsbeispiel eines verbesserten "Pulsator" in Seitenansicht, und
- Fig. 3:: ein zweites Ausführungsbeispiel eines verbesserten "Pulsators" ebenfalls in Seitenansicht und
- Fig. 4:: ein drittes Ausführungsbeispiel eines verbesserten "Pulsator", ebenfalls in Seitenansicht.

In den nachfolgenden Figuren bezeichnen, sofern nicht anders angegeben, gleiche Bezugszeichen gleiche Teile mit gleicher Bedeutung.

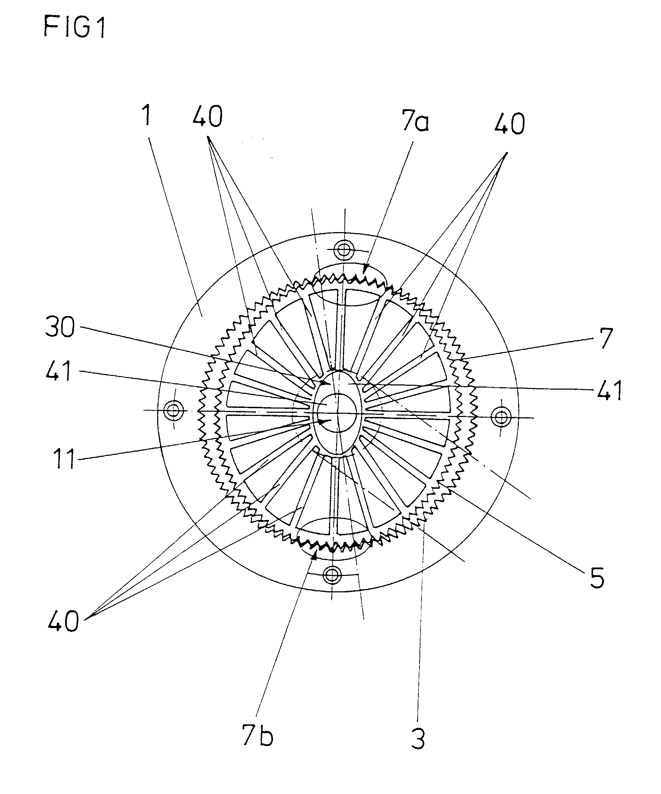

In Fig. 1 ist schematisch eine Schnittansicht durch ein Ausführungsbeispiel eines bekannten Untersetzungsgetriebes nach WO97/08008 dargestellt. Auf dieses Veröffentlichung wird vollinhaltlich zum Zwecke der Offenbarung und zur Erläuterung der Wirkungsweise eines derartigen Getriebes bezug genommen.

Der Verzahnungsring der Abrollbuchse 5 ist, wie Fig. 1 zeigt, an zwei diametral gegenüberliegenden Umfangsabschnitten mit der Innenverzahnung des Stützringes 1 kämmend in Eingriff. Dies wird durch eine elliptischen Antriebskern 41 einer Antriebseinrichtung 30 erreicht. Um den Verzahnungsring 5a an drei Umfangsabschnitten mit der Stützfläche kämmend in Eingriff zu bringen, kann der Antriebskern 41 eine mindestens annähernd dreieckförmige Querschnittsform (nicht dargestellt) aufweisen.

Wie dargestellt, sind die Stege 40 einstückig an den Verzahnungsring der Abrollbuchse 5 angeformt. Dies muß jedoch nicht notwendigerweise so sein. Wie in WO98/08008 beschrieben, kann der Verzahnungsring auch separat von den Stegen gebildet sein (vgl. dortige Fig. 21 bis 24 samt Beschreibung). Allerdings müssen dann die losen Stege in einem Rührungskäfig gehalten werden.

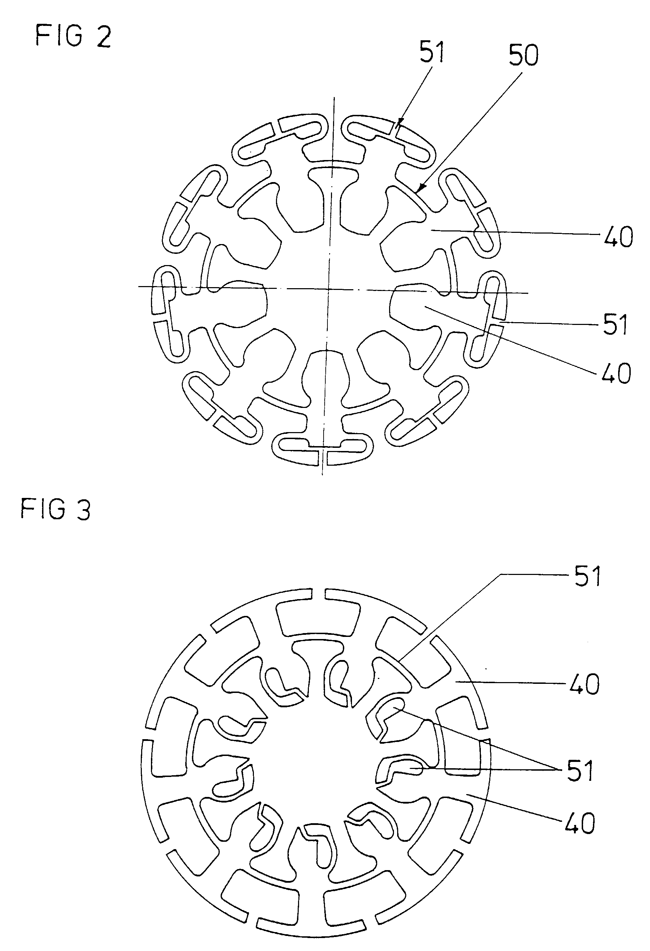

Anstelle dieser zueinander losen Stege mit Führungskäfig werden erfindungsgemäß zur Verfromung des Verzahnungsringes besonders gestaltete Pulsatoren, wie diese in Fig. 2 und 3 dargestellt sind eingesetzt.

Im Ausführungsbeispiel von Fig. 2 ist ein aus flexiblen Material, vorzugsweise Kunststoff, hergestellter Pulsator gezeigt. Dieser Pulsator weist eine Vielzahl von Stößel bzw. Stege 40 auf, hier z.B neun. Die Stege 40 sind miteinander durch ein eintückig angeformtes Ringband 50 miteinander verbunden. Dieses ringband ist verhältnismäßig dünn im Vergleich zur Dicke der Stege 40.

Die Form der jedes Steges 40 ist derart gewählt, daß sich der Durchmesser des Steges 40 vom Ringband 50 aus in Richtung Zentrum etwas verdickt, um dann wieder etwas dünner zu werden. In entgegengesetzte Richtung, also nach außen bleibt der Durchmesser etwa gleich, wobe sich am Ende ein flachgedrücktes kreisringförmiges Element einstückig anschließt. Dieses Element weist mittig einen Schlitz 51 auf.

Die Struktur eines Steges erinnert an die Kontur eines Schnullers mit Haltering, wobei letztere mittig unterbrochen ist.

Im übrigen wird für die erfindungsgemäße Ausgestaltung der Stege ausdrücklich auf die Darstellung von Fig. 2 verwiesen.

In Fig. 3 ist ein zweites Ausführungsbeispiel gezeigt. Die Stege sind jetzt annähernd T-förmig gestaltet, wobei der Querbalken leicht gebogen ist, damit sämtliche Querbalken der Stege 40 auf einem Kreisring liegen. Die schlitzartige Einkerbungen, die wie in Fig. 2 zur Abfederung der Stege 40 beitragen, sind jetzt am inneren Ende der Stege 40 angeformt und laufen in Seitenansicht gesehen etwa L-förmig in den Steg 40 hinein.

Durch das Ringband 50 werden die Stege bzw. Übertragungselemente auf Abstand gehalten. Die radiale Beweglichkeit bleibt erhalten, wobei die Umformungsverluste geringer sind als bei Keilen, die aneinander gleiten.

Das Ringband 51 ist in tangentialer Richtung ausreichend steif, so daß die Stege 40 durch seitliche Reibkräfte des Antriebskerns nicht wegkippen können.

Durch die geometrische Gestaltung der Stege 40 samt Einkerbungen 51 wird ein radial wirkendes Federelement gebildet, welches folgende Aufgaben hat:
- Die innere Reibfläche des Elements wird immer an den Antriebskern angepreßt, wodurch ein Abheben von dessen Oberfläche und dadurch verursachte Geräusche vermieden werden.
- Für die Teile ist eine größere Toleranzbreite zulässig, da durch die Federkraft immer eine reibschlüssige Verbindung zwischen den Übertragungselementen und der Abrollbuchse gewährleistet ist.

Diese Eigenschaften sind besonders bei Teilen aus Kunststoff wichtig, um die vergleichsweise große Wärmeausdehnung im Anwendungstemperaturbereich zu kompensieren.

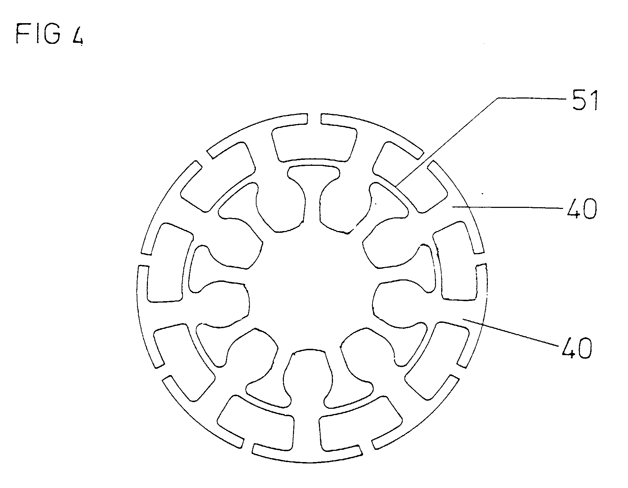

Die Federwirkung kann auch dadurch erreicht werden, daß die Stege 40 zumindest teilweise aus einem elastischen Werkstoff bestehen, was z. B. durch 2-Komponentenspritzguß möglich ist. Ein solches Beispiel ist in Fig. 4 dargestellt. Die Gestaltung des Pulsators entspricht der Fig. 2. Allerdings sind jetzt keine Schlitze in den Stegen 40 vorgesehen.

Das gesamte Übertragungselement kann im Spritzgußverfahren als ein Teil gefertigt werden, was Montage- und Fertigungskosten einspart.

### Bezugszeichenliste

- 1: Stützring
- 3: Stützfläche
- 5: Abrollbuchse
- 7: Außenmantelfläche
- 7a, 7b,: Umfangsabschnitte
- 40: Stege, Stößel
- 41: Antriebskern
- 50: Band
- 51: Einkerbungen

## Patentansprüche

1. Wellgetriebe mit folgenden Merkmalen:
1.1. einen starren Stützring (1) mit einer zylindrischen, innenverzahnten Stützfläche (3);
1.2. eine radialflexible Abrollbuchse (5) mit einer verzahnten Außenmantelfläche (7);
1.3. eine mit einer Antriebswelle (11) verbundene Antriebseinrichtung (30), durch welche über eine Vielzahl von Stegen oder Stößel (40) ein oder mehrere erste Umfangsabschnitte (7a, 7b) der Außenmantelfläche (7) der Abrollbuchse (5) mit der Stützfläche (3) des Stützringes (1) in Eingriff gehalten sind;
gekennzeichnet durch folgende Merkmale:
1.4. jeder der Stege oder Stößel (40) ist zumindest teilweise elastisch ausgebildet.
1.5. die Stege oder Stößel (40) sind mit einem ringförmigen Band einstückig aneinandergeformt, wobei das ringförmige Band mindestens annähernd auf halber Länge der einzelnen Stege oder Stößel (50) angeformt ist.

2. Wellgetriebe nach Anspruch 1, dadurch gekennzeichnet, daß die Elastizität des Stege (40) durch Ausbildung der Stege (40) aus einem elastischen Werkstoff erreicht ist.

3. Wellgetriebe nach Anspruch 1, dadurch gekennzeichnet, daß die Elastizität der Stege (40) durch Ausbildung einer schlitzartigen Nut (51) an zumindest einem der beiden Enden des Steges (40) erreicht ist.

4. Wellgetriebe nach Anspruch 3, dadurch gekennzeichnet, daß die Nut (51) L-förmig gebildet ist.

5. Wellgetriebe nach Anspruch 3, 4 oder 5, dadurch gekennzeichnet, daß die Nut (51) an dem inneren Ende des Steges (40) angebracht ist.

6. Wellgetriebe nach einem der Ansprüche 3 bis 5, dadurch gekennzeichnet, daß die Nut (51) am äußeren Ende des Steges (40) angeordnet ist.
